# EUROPEAN PATENT SPECIFICATION

(11) **EP 1 755 993 B1**
(45) Date of publication and mention of the grant of the patent: **06.01.2010**
(21) Application number: 05736143.8
(22) Date of filing: 29.04.2005
(51) Int. Cl.: B65G 47/252

(54) **SYSTEM FOR INVERTING PIECES OF MEAT HAVING AN IRREGULAR GEOMETRICAL SHAPE**
SYSTEM ZUM UMDREHEN VON FLEISCHSTÜCKEN MIT EINER UNREGELMÄSSIGEN GEOMETRISCHEN FORM
SYSTEME PERMETTANT DE RETOURNER DES MORCEAUX DE VIANDE DE FORME GEOMETRIQUE IRREGULIERE

(30) Priority: 02.05.2004 DK 200400689; 27.08.2004 DK 200401296
(43) Date of publication of application: 28.02.2007
(73) Proprietor: K.J. Maskinfabriken A/S, 6710 Esbjerg (DK)
(72) Inventor: BUSCH, Finn Maag, DK-6710 Esbjerg V (DK)
(74) Representative: Inspicos A/S
(86) International application number: PCT/DK2005/000291
(87) International publication number: WO 2005/105627

(56) References cited:
- EP-A- 0 594 528
- US-A- 4 606 387
- US-A- 4 798 278

## Description

### FIELD OF THE INVENTION

The present invention relates to a system and a corresponding method for inverting pieces of meat having an irregular geometrical shape, the system comprising gripping means for gripping a piece of meat and rotation means for rotating the gripping means about a rotational axis, according to the preamble of claim 1 and 4. A system for inverting veneer stacks having the features of the preamble of claim 10 is disclosed in document US-A-4 606 387.

### BACKGROUND OF THE INVENTION

Processing lines for processing products, such as pieces of meat, often require that the products arrive positioned and/or oriented in a specific manner, thereby allowing the products to undergo further treatment in an automatic manner or to be treated manually at an ergonomically optimal position.

It is often desired that a product is inverted in such a way that its lower side becomes its upper side when the product is transported along a subsequent processing line, thereby allowing subsequent process(es) to be performed in an optimal manner.

Inverting products having an irregular geometrical shape can be required in processing lines in various industries, in particular in the food industry, e.g. in slaughterhouses.

With increased automation and focus on ergonomics in slaughterhouses, it is important that pieces of meat from a carcase arrive to a processing line in a correct orientation and position in order to allow for an automatic process to be performed with an optimal yield, or in order to allow for a manual process to be performed in an ergonomically correct manner.

A subsequent process can, e.g., be automatic derinding, where the lard portion of the meat is cut away, and a correct positioning of the piece of meat relatively to the derinding equipment is crucial for a correct processing. At the present time the piece of meat is positioned manually in front of the derinding equipment.

Another subsequent process can be manual further processing of the piece of meat, and it is therefore important that the side of the piece of meat, on which the processing is to take place, is facing the operator. At the present time the piece of meat is inverted manually, if needed.

Slaughterhouses impose increasing demands on the correct positioning of pieces of meat relatively to the subsequent process in the process line, thereby allowing a subsequent automatic process to be performed in an optimal manner, or allowing a subsequent manual process to be performed in an ergonomically optimal manner.

### SUMMARY OF THE INVENTION

An object of the present invention is to provide a system which fulfils the requirements described above.

According to a first aspect of the present invention the above and other objects are fulfilled by providing a slaughtering system for inverting pieces of meat having an irregular geometrical shape according to the appended claim 1.

In the present context the term 'piece of meat' should be interpreted as a part of a carcase which needs to undergo further processing steps. It may, e.g., be parts which have already undergone primary cutting, e.g. hams, loins, front parts, etc. Thus, the piece of meat is a relatively lumpy part of the carcase, i.e. it has an irregular geometrical shape. Furthermore, it should be understood that the piece of meat will typically be unpacked.

The system comprises means for moving the piece of meat into and/or out of the system.

The means for moving the piece of meat into and/or out of the system is integrated with the gripping means. In the form of at least one conveyor or conveyor section forming part of the gripping means being the means for moving the piece of meat into and/or out of the system.

The gripping means comprises at least two conveyors or conveyor sections mounted on a common frame. In this case at least one of the conveyors may be movable along the common frame, and the gripping means are positioned in such a way that movement of the conveyor(s) causes the gripping means to grip or release a piece of meat. The two conveyors may be band conveyors, and may each be provided with a drive unit for driving the band. These drive units are preferably positioned opposite each other in such a way that at least one of the conveyors has its drive unit positioned in a downstream end of the conveyor. In the present context the terms 'upstream end' and 'downstream end' should be interpreted in the following manner. During normal operation a piece of meat being conveyed will first arrive at an upstream end of a conveyor, and it will subsequently move towards a downstream end. When a point is positioned 'downstream' relatively to another point, a piece of meat being conveyed will therefore reach this point at a later time during normal operation.

In the embodiment described above at least one of the conveyors may be movable along the common frame by means of actuators, in such a way that the conveyors may approach each other and grip a piece of meat being positioned between them, and retain it during rotation about the rotational axis. After rotation of 180 degrees or -180 degrees at least one of the conveyors is again moved by means of the actuators, thereby moving the conveyors away from each other. Thereby the conveyors will no longer be gripping and retaining the piece of meat, and the piece of meat can therefore be transported further on through the processing line. According to the invention the lower conveyor is always lowered to be flush with the processing line, thereby facilitating further transport along the processing line.

The system may further comprise control means for controlling moving means for moving the piece of meat into and/or out of the system. Such control means may preferably be adapted to start and/or stop the moving means, e.g. in such a way that the moving means is started when it is desired to move a piece of meat into or out of the system, and the moving means is stopped when a piece of meat is in a desired positioned in the system and it is desired to invert the piece of meat. In this case the piece of meat will not be moved by the moving means during the inversion.

The system may further comprise means for detecting a position of an arriving piece of meat in the system, and the control means may be adapted to control the means for moving the piece of meat into and/or out of the system based on a signal produced by the detecting means. The detecting means may comprise optical detecting means, such as a vision system which is able to detect the exact position of the piece of meat. In this case, when the piece of meat is in a desired position, the vision system may produce a 'stop signal' and provide the signal to the moving means. The moving means will then, in turn, stop the movement of the piece of meat which will accordingly remain in the desired position.

The detecting means may, alternatively or additionally, comprise one or more photo cells or similar means for detecting the presence of a specific part of the piece of meat in a specific position. Thus, the detecting means may comprise a plurality of photo cells arranged in a row or an array, thereby forming a 'wall' or 'curtain' of photo cells arranged across a conveyor in such a way that the line of at least one photo cell is broken when a part of the piece of meat crosses the position of the wall/curtain. The detecting means may even comprise two or more such walls or curtains arranged at various positions along the conveyor, the detecting means thereby being able to detect various positions of a piece of meat along the conveyor.

The detecting means may be adapted to detect a rear edge of an arriving piece of meat. In this case the detecting means may preferably comprise a photo cell or an array of photo cells arranged across an upstream end of the conveyor, the detecting means thereby being able to detect when the piece of meat has passed the point of the photo cell(s).

Alternatively or additionally, the detecting means may be adapted to detect a front edge of an arriving piece of meat. This is very similar to what is described above in relation the detecting the rear edge. However, in this case the detecting means may preferably comprise a photo cell or an array of photo cells arranged across a downstream end of the conveyor, the detecting means thereby being able to detect when the front end of the piece of meat arrives at the point of the photo cell(s).

In one embodiment of the present invention the gripping means is rotatable about an axis which is at least substantially perpendicular to the direction of movement of the pieces of meat into and/or out of the system, preferably a substantially horizontal axis. Furthermore, due to wiring of the rotating means it is often desirable to sometimes rotate the gripping means through an angle of 180 degrees, and sometimes through an angle of -180 degrees. It has been found that rotating the gripping means in such a way that the centre of mass of the piece of meat is closer to the edge which rotates downwards than to the edge which rotates upwards, requires considerably less power than rotating the gripping means in the opposite direction. Knowing in which direction the next piece of meat is to be rotated, it is therefore desirable to position this piece of meat in such a way that the centre of mass is closer to the edge which will rotate downwards. This may be achieved by arranging a photo cell or a plurality of photo cells across the upstream edge and across the downstream edge. Thereby it will be possible to detect the presence of a piece of meat as close as possible to either edge, and it will therefore be possible to control the moving means in such a way that a given piece of meat is positioned as close as possible, and thereby also with its centre of mass as close as possible, to the edge which will be rotating downwards, regardless of whether this will be the upstream or the downstream edge.

Thus, the detecting means may be adapted to detect at least an approximate position of a centre of mass of an arriving piece of meat, e.g. by means of photo cells as described above, or by means of a vision system.

The rotational axis may be horizontal or substantially horizontal.

The system may further be adapted to allow an arriving piece of meat, which does not require inversion, to pass through the system without inverting the piece of meat, because the lower conveyor forms part of the transporting line of a processing line.

The present invention further relates to a method for inverting pieces of meat having an irregular geometrical shape using a system as described above according to the appended claim 4. It further relates to use of the system described above for inverting pieces of meat in a slaughterhouse during processing of animal carcases according to the appended claim 10.

### BRIEF DESCRIPTION OF THE DRAWINGS

The invention will now be further described with reference to the accompanying drawings in which:
Fig. 1 shows a preferred construction of a system according to the present invention, and
Figs. 2-7 show an inversion process step by step in the preferred construction of the system.

### DETAILED DESCRIPTION OF THE DRAWINGS

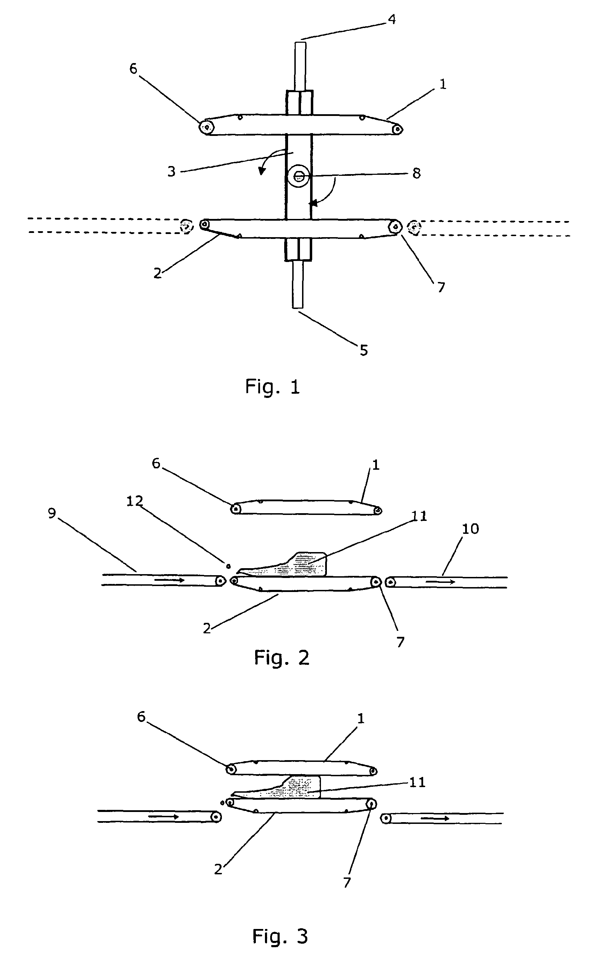

Fig. 1 shows a system according to the present invention comprising two conveyors 1 and 2 mounted on a common frame 3, and actuators 4 and 5 for moving conveyors 1 and 2, respectively, along frame 3, and drive unit 6 for conveyor 1 and drive unit 7 for conveyor 2. Fig. 1 further shows a horizontal rotational axis 8 for the common frame 3, the arrows indicating directions of rotation clockwise as well as counter-clockwise. The common frame 3 with the conveyors 1 and 2 may therefore be rotated in a clockwise direction as well as in a counter-clockwise direction about the rotational axis 8.

Fig. 2 shows a piece of meat 11, illustrated as a pork ham with hind toe, which has arrived along conveyor 9 in the processing line, thereby arriving at conveyor 2 which has been stopped in response to a signal from detecting means 12, since it is desired to invert this piece of meat 11. It is clear from Fig. 2 that conveyor 2 has been stopped as soon as the piece of meat 11 has entered conveyor 2. Thus, in the process illustrated in Figs. 2-7 the system is controlled on the basis of a position of a rear edge of the piece of meat 11.

Fig. 3 shows the two conveyors 1 and 2 after they have been moved along frame 3. Conveyor 2 has been elevated and conveyor 1 has been lowered relatively to the positions of the conveyors 1 and 2 in Fig. 2, the two conveyors 1 and 2 thereby gripping and retaining the piece of meat 11 for the purpose of the upcoming inversion.

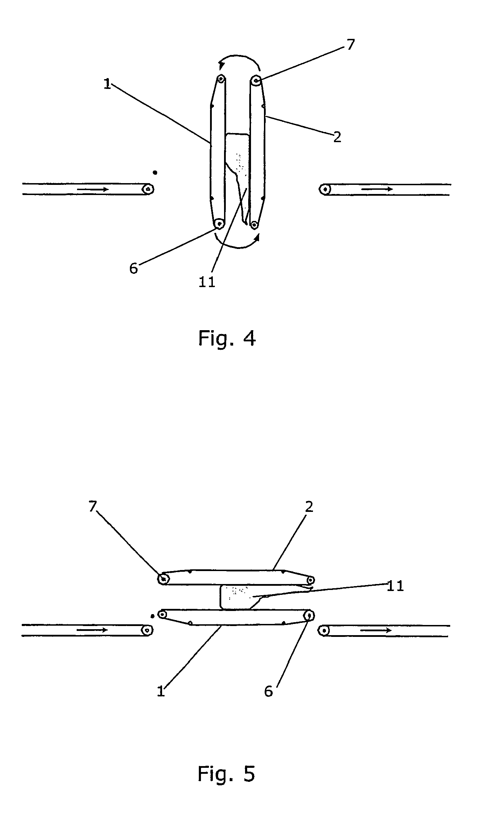

Fig. 4 shows the system, where the piece of meat 11 is in the process of being inverted, in this case in a counter-clockwise direction. The inversion is performed by rotating the common frame 3 along with the conveyors 1 and 2 mounted thereon, as well as the retained piece of meat 11 about rotational axis 8. Since the common frame 3 is rotated in a counter-clockwise direction, and since the piece of meat 11 was stopped as close as possible to the rear edge of conveyor 2, it is clear that the rotation is performed in such a way that the edge of conveyor 2 which is closest to the centre of mass of the piece of meat 11 is moved downwards as described above, thereby saving power during the rotation.

Fig. 5 shows the system, where the inversion has been completed, and conveyor 1 is now in a lower position, while conveyor 2 is in an upper position. The piece of meat 11 has been inverted in such a way that the side which was facing downwards when the piece of meat 11 arrived is now facing upwards.

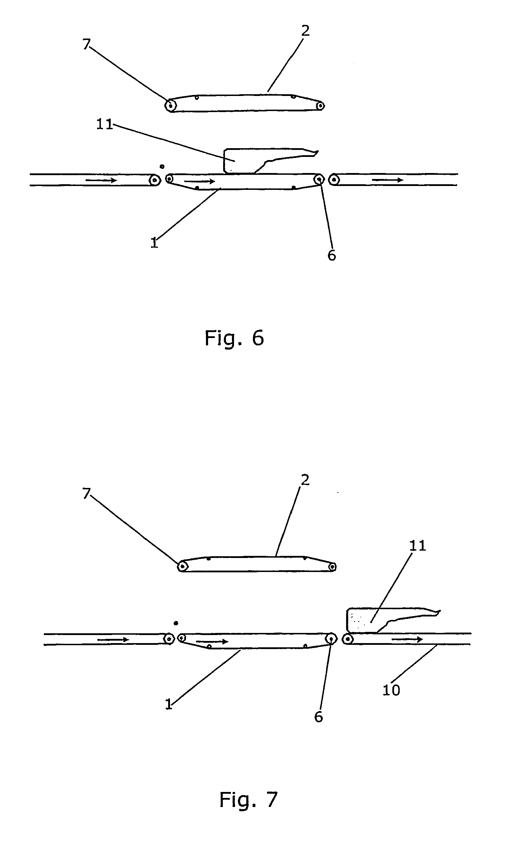

Fig. 6 shows the system, where conveyors 1 and 2 have been moved along frame 3 in such a way that conveyor 1 is flush with the processing line and the piece of meat 11 is no longer retained by the conveyors 1 and 2. By subsequently starting conveyor 1 the piece of meat 11 can be moved on to conveyor 10 in the processing line. During the subsequent transport the piece of meat 11 will be transported with the side, which was facing upwards when the piece of meat 11 arrived to the inversion system, now facing downwards.

Fig. 7 shows the further transport of the inverted piece of meat 11 on conveyor 10. This further transport is considerably facilitated by ensuring that the lower conveyor 1 is flush with the subsequent conveyor 10.

## Claims

1. A slaughtering system for inverting pieces of meat (11) having an irregular geometrical shape, the system comprising gripping means (1, 2) for gripping a piece of meat (11) and rotation means for rotating the gripping means (1, 2) about a rotational axis (8), and means for moving the piece of meat (11) into and/or out of the system, the means for moving the piece of meat (11) into and/or out of the system being integrated with the gripping means (1, 2), the gripping means comprising at least two conveyors (1, 2), said conveyors (1, 2) forming at least a part of the means for moving the piece of meat (11) into and/or out of the system, said conveyors (1, 2) being mounted on a common frame (3), at least one of the conveyors (1, 2) being movable along the common frame, and the gripping means being positioned in such a way that movement of the conveyor(s) (1, 2) causes the gripping means to grip or release a piece of meat (11), and in such a way that movement along the common frame (3) causes the distance between two of the conveyors (1, 2) to change,
**characterized in that**
the conveyor(s) is/are movable in such a way that the distance between the conveyors (1, 2) is variable between a minimum and a maximum distance, and wherein a lower conveyor (1, 2) is aligned with an adjacent processing line when the distance between the conveyors (1, 2) is the maximum distance.

2. A system according to claim 1, further comprising control means for controlling the means for moving the piece of meat (11) into and/or out of the system, and means for detecting a position of an arriving piece of meat (11) in the system, and wherein the control means is adapted to control the means for moving the piece of meat (11) into and/or out of the system based on a signal produced by the detecting means.

3. A system according to claim 1 or 2, further being adapted to allow an arriving piece of meat (11) to pass through the system without inverting the piece of meat (11).

4. A method for inverting pieces of meat having an irregular geometrical shape, the method comprising the steps of:
gripping the piece of meat by means of gripping means, said gripping means comprising at least two conveyors (1, 2) mounted on a common frame, the step of gripping and/or the step of releasing the piece of meat being performed by moving at least one of the conveyors along the common frame,
rotating the gripping means and the piece of meat about a rotational axis, thereby providing inversion of the piece of meat, and
releasing the grip of the piece of meat by the gripping means,
wherein the conveyor(s) is/are movable in such a way that the distance between the converyors (1, 2) is variable between a minimum and a maximum distance, the step of releasing the piece of meat is performed in such a way that a lower conveyor is subsequently positioned at least substantially flush with an adjacent processing line, when the distance between the conveyors (1, 2) is the maximum distance.

5. A method according to claim 4, further comprising the steps of:
receiving the piece of meat in a system for inverting pieces of meat having an irregular geometrical shape, and
delivering the inverted piece of meat from the system.

6. A method according to claim 5, wherein the step of receiving and/or the step of delivering the piece of meat is/are performed by the gripping means.

7. A method according to any of claims 4-6, wherein the step of gripping and/or the step of releasing the piece of meat is/are performed by changing the distance between two of the conveyors.

8. A method according to any of claims 4-7, further comprising the steps of:
detecting a position of an arriving piece of meat in the system,
producing a corresponding control signal, and
controlling the system based on the produced control signal.

9. A method according to claim 8, wherein the controlling step comprises stopping the arriving piece of meat when it is in a desired position.

10. Use of a system according to any of claims 1-3 for inverting pieces of meat having an irregular geometrical shape in a slaughterhouse during processing of animal carcases.

## Patentansprüche

1. Schlachtsystem zum Umdrehen von Fleischstücken (11) mit unregelmäßiger geometrischer Form, wobei das System Greifmittel (1, 2) zum Greifen eines Fleischstücks (11) und Drehmittel zum Drehen der Greifmittel (1, 2) um eine Drehachse (8) und Mittel zum Bewegen des Fleischstücks (11) in das und/oder aus dem System umfasst, wobei die Mittel zum Bewegen des Fleischstücks (11) in das und/oder aus dem System einstückig mit den Greifmitteln (1, 2) ausgebildet werden, wobei die Greifmittel mindestens zwei Förderbänder (1, 2) umfassen, wobei die Förderbänder (1, 2) mindestens einen Teil der Mittel zum Bewegen des Fleischstücks (11) in das und/oder aus dem System darstellen, wobei die Förderbänder (1, 2) auf einem gemeinsamen Rahmen (3) montiert sind, wobei mindestens eines der Förderbänder (1, 2) entlang des gemeinsamen Rahmens beweglich ist und wobei die Greifmittel derart angeordnet sind, dass die Bewegung des Förderbands bzw. der Förderbänder (1, 2) das Ergreifen oder Freigeben eines Fleischstücks (11) verursacht, und zwar derart, dass die Bewegung entlang des gemeinsamen Rahmens (3) dazu führt, dass sich der Abstand zwischen zwei der Förderbänder (1, 2) verändert,
**dadurch gekennzeichnet, dass**
das Förderband bzw. die Förderbänder derart beweglich ist bzw. sind, dass der Abstand zwischen den Förderbändern (1, 2) zwischen einem Mindestabstand und einem Höchstabstand veränderlich ist und wobei ein unteres Förderband (1, 2) an einer benachbarten Verarbeitungslinie ausgerichtet ist, wenn der Abstand zwischen den Förderbändern (1, 2) der Höchstabstand ist.

2. System nach Anspruch 1, weiterhin umfassend Steuermittel zum Steuern der Mittel zum Bewegen des Fleischstücks (11) in das und/oder aus dem System und Mittel zum Erfassen einer Position eines am System ankommenden Fleischstücks (11) und wobei das Steuermittel geeignet ist, die Mittel zum Bewegen des Fleischstücks (11) in das und/oder aus dem System auf der Grundlage eines von den Erfassungsmitteln erzeugten Signals zu steuern.

3. System nach Anspruch 1 oder 2, weiterhin geeignet zu ermöglichen, dass ein ankommendes Fleischstück (11) ohne Umdrehen des Fleischstücks (11) durch das System passieren kann.

4. Verfahren zum Umdrehen von Fleischstücken mit unregelmäßiger geometrischer Form, wobei das Verfahren folgende Schritte umfasst:
Greifen des Fleischstücks mithilfe der Greifmittel, wobei die Greifmittel mindestens zwei Förderbänder (1, 2) umfassen, die an einem gemeinsamen Rahmen montiert sind, wobei der Schritt des Greifens und/oder der Schritt des Freigebens des Fleischstücks durch Bewegen mindestens eines der Förderbänder entlang des gemeinsamen Rahmens durchgeführt wird,
Drehen der Greifmittel und des Fleischstücks um eine Drehachse, wodurch ein Umdrehen des Fleischstücks erreicht wird, und
Freigeben des Haltens des Fleischstücks durch die Greifmittel,
wobei
das Förderband bzw. die Förderbänder derart beweglich ist bzw. sind, dass der Abstand zwischen den Förderbändern (1, 2) zwischen einem Mindestabstand und einem Höchstabstand veränderlich ist,
der Schritt des Freigebens des Fleischstücks derart durchgeführt wird, dass ein unteres Förderband anschließend mindestens im Wesentlichen bündig zu einer benachbarten Verarbeitungslinie angeordnet ist, wenn der Abstand zwischen den Förderbändern (1, 2) der Höchstabstand ist.

5. Verfahren nach Anspruch 4, ferner umfassend die folgenden Schritte:
Erhalten des Fleischstücks in einem System zum Umdrehen von Fleischstücken mit unregelmäßiger geometrischer Form und
Abgeben des umgedrehten Fleischstücks aus dem System.

6. Verfahren nach Anspruch 5, wobei der Schritt des Erhaltens und/oder der Schritt des Abgebens des Fleischstücks durch die Greifmittel durchgeführt wird bzw. werden.

7. Verfahren nach einem der Ansprüche 4-6, wobei der Schritt des Greifens und/oder der Schritt des Freigebens des Fleischstücks durch Verändern des Abstands zwischen zwei der Förderbänder durchgeführt wird bzw. werden.

8. Verfahren nach einem der Ansprüche 4-7, ferner umfassend die folgenden Schritte:
Erfassen einer Position eines ankommenden Fleischstücks im System,
Erzeugen eines entsprechenden Steuersignals und
Steuern des Systems auf der Grundlage des erzeugten Steuersignals.

9. Verfahren nach Anspruch 8, wobei der Steuerschritt das Anhalten des ankommenden Fleischstücks umfasst, wenn es in einer gewünschten Position ist.

10. Verwendung eines Systems nach einem der Ansprüche 1-3 zum Umdrehen von Fleischstücken mit unregelmäßiger geometrischer Form in einem Schlachthof während der Verarbeitung von Tierkörpern.

## Revendications

1. Système d'abattage permettant de retourner des morceaux de viande (11) de forme géométrique irrégulière, le système comprenant des outils de préhension (1, 2) servant à saisir un morceau de viande (11) et des moyens de rotation destinés à faire pivoter les outils de préhension (1, 2) autour d'un axe de rotation (8), ainsi que des moyens permettant de déplacer le morceau de viande (11) pour le faire entrer et/ou sortir du système, ces derniers étant intégrés aux outils de préhension (1, 2), ceux-ci comprenant au moins deux transporteurs (1, 2), lesdits transporteurs (1, 2) faisant au moins partie des moyens permettant de déplacer le morceau de viande (11) pour le faire entrer et/ou sortir du système, lesdits transporteurs (1, 2) étant montés sur un cadre commun (3), au moins l'un des transporteurs (1, 2) étant déplaçable le long du cadre commun et les outils de préhension étant placés de telle manière que par le déplacement du/des transporteur(s) (1, 2), les outils de préhension saisissent ou relâchent un morceau de viande (11) et de façon à ce que le déplacement le long du cadre commun (3) modifie l'écart entre deux des transporteurs (1, 2),
**caractérisé en ce que**
le/les transporteur(s) se déplace(nt) de telle manière que l'écart entre les transporteurs (1, 2) varie entre un écart minimal et un écart maximal, et un transporteur inférieur (1, 2) étant aligné face à une chaîne de traitement adjacente lorsque l'écart entre les transporteurs (1, 2) est maximal.

2. Système selon la revendication 1, comprenant également des moyens de commande servant à commander les moyens permettant de déplacer le morceau de viande (11) pour le faire entrer et/ou sortir du système, et des moyens servant à détecter la position d'un morceau de viande (11) entrant dans le système, les moyens de commande étant prévus pour commander les moyens permettant de déplacer le morceau de viande (11) pour le faire entrer et/ou sortir du système, à partir d'un signal émis par les moyens de détection.

3. Système selon la revendication 1 ou 2, étant également prévu pour permettre à un morceau de viande (11) entrant de traverser le système sans être retourné.

4. Méthode permettant de retourner des morceaux de viande de forme géométrique irrégulière, la méthode comprenant les étapes suivantes :
préhension du morceau de viande par les outils de préhension, ces derniers comprenant au moins un transporteur monté sur un cadre commun, l'étape de préhension et /ou l'étape de relâchement du morceau de viande étant réalisée en déplaçant au moins l'un des transporteurs le long du cadre commun,
rotation des moyens de préhension et du morceau de viande autour d'un axe de rotation, réalisant ainsi le retournement du morceau de viande, et
relâchement de la préhension du morceau de viande par les outils de préhension,
**caractérisée en ce que**
l'étape de relâchement du morceau de viande est effectuée de telle manière qu'un transporteur inférieur est ensuite placé au moins bien affleuré à une chaîne de traitement adjacente.

5. Méthode selon la revendication 4, comprenant également les étapes suivantes :
réception du morceau de viande dans un système permettant de retourner des morceaux de viande de forme géométrique irrégulière et
livraison du morceau de viande retourné par le système.

6. Méthode selon la revendication 5, dans laquelle l'étape de réception et/ou l'étape de livraison du morceau de viande est/sont effectuée(s) par les outils de préhension.

7. Méthode selon l'une des revendications 4 à 6, dans laquelle l'étape de préhension et/ou l'étape de relâchement du morceau de viande et/sont effectuée(s) en modifiant l'écart entre deux des transporteurs.

8. Méthode selon l'une des revendications 4 à 7, comprenant également les étapes suivantes :
détection de la position d'un morceau de viande entrant dans le système,
émission d'un signal de commande correspondant, et
commande du système à partir du signal de commande émis.

9. Méthode selon la revendication 8, l'étape de commande comprenant l'arrêt du morceau de viande entrant lorsqu'il se trouve dans la position souhaitée.

10. Utilisation d'un système selon l'une des revendications 1 à 3 permettant de retourner des morceaux de viande de forme géométrique irrégulière dans un abattoir pendant le traitement de carcasses animales.
